# EUROPEAN PATENT APPLICATION

(11) **EP 1 302 851 A2**
(43) Date of publication of application: **16.04.2003**
(21) Application number: 02256267.2
(22) Date of filing: 11.09.2002
(51) Int. Cl.: G06F 9/445

(54) **Improvements relating to reprogramming an electronic apparatus**

(30) Priority: 21.09.2001 GB 0122901
(71) Applicant: Hewlett-Packard Company, A Delaware Corporation, Palo Alto, CA 94304 (US)
(72) Inventor: Lay, Matthew, 08037 Barcelona (ES)
(74) Representative: Marsh, David John

(57) **Abstract**

A method of reprogramming electronic apparatus programmed with a first code held in a non-volatile memory during normal operation of said apparatus comprising: i. copying a second code, comprising a reprogramming portion arranged to reprogram said non-volatile memory, and an instruction portion, into a temporary memory and ii. executing at least said reprogramming portion of said second code from said temporary memory in order to cause said second code to be programmed into said non-volatile memory replacing said first set of code in said non-volatile memory. Such a method is particularly applicable to computer peripherals such as tape drives, MODEMS, CD-ROMS, etc.

To be accompanied, when published, by Figure 3 of the drawings.

## Description

This invention relates to a method of reprogramming electronic apparatus together with related apparatus.

It is well known for electronic apparatus, in particular but not exclusively, computer peripherals to contain processing circuitry that operates according to code held within a memory. Examples of such computer peripherals include tape drives, CD ROMs, DVD ROMs/RAMs, MODEMs, etc. So that the code is not lost when power is removed from the apparatus the code needs to be held in some form of non-volatile memory. Generally, the non-volatile memory used is some form of flash memory, in order that the apparatus can be reprogrammed to have new code stored therein. Such reprogramming is performed if errors are found within the previous code, newer faster versions of the code become available, etc.

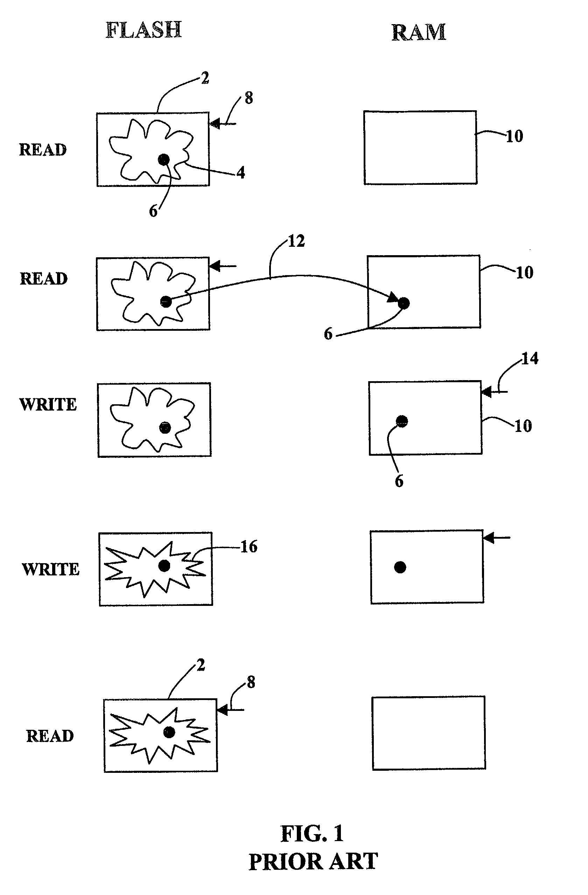

A prior art method of reprogramming an electronic apparatus is shown in Figure 1. The electronic apparatus comprises a flash memory from which a first code 4 is executed to control the functionality of the electronic apparatus. As such a program counter 8 points to a valid address within the flash memory 2. The first code comprises a reprogramming portion 6 and a Random Access Memory 10 is also provided within the electronic apparatus. During normal operation the flash memory is maintained in a read state so that its contents may not be altered.

For a variety of reasons, it can be necessary to replace the first code within the flash memory 2, in which case the reprogramming portion 6 of the first code 4 is copied 12 to the RAM 10. Execution then switches from the first code 4 held in the flash memory 2 to the reprogramming portion 6 held in the RAM 10, and thus the program counter 14 now points at an address within the RAM 10. Further, once the program counter 14 points at an address in the RAM 10 the flash memory is altered to a write state.

Next, the reprogramming portion 6 causes a second code 16, which is generally different from the first code, to be programmed into the flash memory. Once the second code has successfully been written into the flash memory 2 the flash memory is returned to the read state and the program counter 8 is once again made to point at an address in the flash memory 2.

Thus, this prior art method of reprogramming the non-volatile memory simply replaced the first code within the non-volatile memory with the new, second, code. A problem with this approach is that if the second code does not function the apparatus may no longer function as desired, due to problems with the second code. These problems may not be manifested until it is time to reprogram the non-volatile memory if the problems with the second code occur in the reprogramming portion of the second code.

An aim of the present invention is to reduce, or solve, the problems of the prior art.

According to a first aspect of the invention there is provided a method of reprogramming electronic apparatus programmed with a first code held in a non-volatile memory during normal operation of said apparatus comprising:
i. copying a second code, comprising a reprogramming portion arranged to reprogram said non-volatile memory, and an instruction portion, into a temporary memory
ii. executing at least said reprogramming portion of said second code from said temporary memory in order to cause said second code to be programmed into said non-volatile memory replacing said first set of code in said non-volatile memory.

An advantage of this method is that it ensures that the portion of the second code used to program the second code into the non-volatile memory functions correctly. If the portion of the second code does not function, then the non-volatile memory will not be reprogrammed, and thus, the first code residing in the non-volatile memory will not be lost. Since the first code has not been lost, the apparatus will continue to function.

The non-volatile memory is preferably flash memory, but could be any other form of non-volatile storage. For example the non-volatile memory may be any one or more of the following: EPROM, E²PROM, a disk drive, battery backed RAM, FPGA, or the like.

In one embodiment the method comprises reprogramming said non-volatile memory with said reprogramming portion in addition to said instruction portion. An advantage of this arrangement is that said reprogramming portion can be reused at a later time if it desired to reprogram said non-volatile memory once again. This assumes that the contents of said temporary memory is lost either through loss of power thereto, or by being refreshed to hold other code.

In another embodiment the method comprises reprogramming said non-volatile memory with said instruction portion of said second code, and not said reprogramming portion. An advantage of this method is that the storage capacity of the non-volatile memory can be lower, and that consequently the cost of the apparatus can be reduced. Alternatively, the size of the code that can be fitted into non-volatile memory may be increased. It will be appreciated that many forms of code space reduction exist, and this method may be used in addition to many, or all, of these other forms reduction, and provides a further optimisation.

However, it will appreciated that once the contents of the temporary memory have been refreshed that the reprogramming portion may be lost. However, it may be that every second code that is copied into said temporary memory comprises a reprogramming portion, and in such circumstances it does not matter if the reprogramming portion is lost once the temporary memory is refreshed.

Preferably, the method arranges for the reprogramming portion to occur after the instruction portion within the second code. An advantage of such an arrangement is that it makes copy of the code from the temporary memory to the flash memory easier; it is simply necessary to start copying at the beginning of the instruction portion and to finish copying before the start of the reprogramming portion.

Conveniently, the method comprises using a Random Access Memory (RAM) as the temporary memory. Such an arrangement is convenient because RAM is generally provided in the architecture of electronic apparatus to which this method will be applied.

However, in other embodiments the method comprises using any other form of memory for the temporary memory. Indeed, the temporary memory may also comprise a non-volatile memory, and may comprise any of the types of memory mentioned above in relation to the non-volatile memory.

The method may be suitable for electronic apparatus that is connected to an external device, preferably containing a processor. Examples of possible external devices may include any one or more of the following: a television, a Hi/Fi system or component, a satellite/cable television decoder, or the like. The skilled person will appreciate that these are merely examples and that there may be other external devices to which the electronic apparatus may be connected.

Conveniently the method may be used for electronic apparatus that is connected to an external device comprising a computer. The computer may be any form of computer such as a PC, an Apple™, etc.

The term "connected" is intended to relate to a data connection between the electronic apparatus, and the external device, and does not necessarily refer to a physical connection. The skilled person will appreciate that there are various wireless protocols that may be used to connect two devices. Examples of such links include any one or more of the following: an IRDA link, a Bluetooth link, a WIFI link, etc.

Conveniently, the method comprises copying the second code into the temporary memory from a computer to which the electronic apparatus is attached.

The method may be suitable for any one of more of the following apparatus: a tape drives, CD ROMs, DVD ROMs/RAMs, MODEMs, video cards, sound cards, motherboards, hard disk drives, digital cameras, mobile phones, network cards, mp3 players, t.v. decoders, etc. The skilled person will appreciate that these are provided by way of example only and many other electronic apparatus may be suitable.

The electronic apparatus may generally be controlled by the code running from the non-volatile memory, and as such a program counter of a processor of the electronic apparatus may generally point at an address in the non-volatile memory. The method may comprise switching execution from the non-volatile memory to the temporary memory before the second code is programmed into said non-volatile memory (and thus the program counter may be switched to an address in the temporary memory).

Once execution has been switched to the temporary memory the non-volatile memory may be erased. Alternatively, the first code contained in the first code within the non-volatile memory may be overwritten by the second code.

Once the second code has been programmed into the non-volatile memory, the program counter may be pointed at a predetermined address in the non-volatile memory. The predetermined address is preferably the start address of the second code. Such an arrangement conveniently causes the second code to start executing.

In one embodiment before step ii. of the method is performed the method comprises checking that the second code is suitable for programming the non-volatile memory. Such an arrangement has the advantage that it ensures the second code is suitable for reprogramming the non-volatile memory before reprogramming of the non-volatile memory starts. If reprogramming were to commence before such a check were made then first code may be corrupted before it were discovered that the second code were not suitable.

If the method determines that the second code is not suitable for reprogramming the non-volatile memory then the method may continue to use the first code.

The method may comprise ascertaining the identity of the components within the electronic apparatus by interrogating them. It will be appreciated that generally integrated circuits contain a register, memory location, or the like that contains their identity, and that it is therefore possible to ascertain the identity by interrogating this register, memory location, etc.

Conveniently the method may comprise comparing the identity obtained by interrogating the components with a list of suitable hardware contained within a portion of the second code. The list of suitable hardware may be held regarding the compatibility of the instruction portion and / or the reprogramming portion. An advantage of such a comparison step is that it can be determined whether, or not, the second code is suitable before reprogramming of the non-volatile memory is attempted.

The method may comprise arranging the reprogramming portion such that it contains the necessary code to reprogram a plurality of hardware types. An advantage of such a method is that it is possible to download a single second code to reprogram a variety of different electronic apparatus.

According to a second aspect of the invention there is provided a computer readable medium having stored therein instructions for causing a processing unit to execute the method of the first aspect of the invention.

The computer readable medium, although not limited to, may be any one of the following: a floppy disk, a CDROM, a DVD ROM/RAM, a ZIP^{TN} disk, a magneto optical disc, a hard drive, a transmitted signal (including an internet download, file transfer, etc.).

According to a third aspect of the invention there is provided an electronic apparatus comprising a non-volatile memory generally holding a first code and capable of being reprogrammed, a temporary memory arranged to hold code temporarily, a processor arranged to execute instructions held in either the non-volatile memory, or the temporary memory, and a transmitter / receiver arranged to receive data from a source external of the apparatus, wherein the processor is arranged to cause a second code, comprising at least an instruction and a reprogramming portion, to be downloaded into the temporary memory via the transmitter / receiver and store said second code in said temporary memory and execute at least said reprogramming portion of said second code residing in said temporary memory to reprogram said flash memory with said second code.

An advantage of such an apparatus is that it can help to ensure that the portion of the second code that is arranged to cause the processor to reprogram the non-volatile memory functions correctly, before the non-volatile memory is reprogrammed. If the non-volatile memory is reprogrammed before the correct functionality of the second code is ascertained the first code is generally lost meaning that the instructions then provided by the code residing in the non-volatile memory no longer cause the apparatus to function correctly.

The non-volatile memory is preferably flash memory, but could be any other form of non-volatile storage. For example the non-volatile memory may be any one or more of the following: EPROM, E²PROM, a disk drive, FPGA, or the like.

The temporary memory is conveniently RAM, but may be any other suitable form of memory. Indeed, the temporary memory may itself be a non-volatile memory as described above.

Examples of the apparatus include any one or more or the following: tape drives, CD ROM drivess, DVD ROMs/RAMs drives, MODEMs, video cards, sound cards, motherboards, hard disk drives, digital cameras, mobile phones, network cards, mp3 players, t.v. decoders, etc. The skilled person will appreciate that these are provided by way of example only and many other electronic apparatus may be suitable.

In one embodiment the processor is arranged to obtain the second code from a computer readable medium readable by the apparatus. For example, if the apparatus is a tape drive it may be arranged to obtain the second code from a tape inserted into the drive. In a further example, if the apparatus is a CD-ROM drive it may be arranged to obtain the second code from a CD-ROM inserted into the drive.

The transmitter / receiver may be arranged to connect to a network. The network may be a Local Area Network (LAN), or may be a network such as the Internet. An advantage of such an arrangement is that the second code is readily obtainable.

The transmitter / receiver may be arranged to connect to an external device, receive said second code from said external device.

Conveniently, the non-volatile memory is capable of holding both the reprogramming and the instruction portions of the second code. Alternatively, or additionally, the non-volatile memory may be capable of holding only the instruction portion of the second code.

Conveniently, the processor is arranged to interrogate components of the apparatus to ascertain their identity. Further, the processor may be arranged to compare the identity obtained from the hardware components with a portion of the second code, and may be further arranged to reprogram the non-volatile memory only if the second code is compatible with the apparatus.

According to a fourth aspect of the invention there is provided a system comprising a device containing a processor connected to an apparatus according to the third aspect of the invention.

The device may comprise a computer.

The transmitter / receiver of the apparatus may comprise a connection between the apparatus and the computer. Such an arrangement provides a convenient source of the second code. The skilled person will appreciate a computer can accept data from a variety of sources. Such sources may comprise any one or more of the following: external media such as floppy disks, CD-ROMS, DVD ROM/RAM, other magneto optical storage media; via remote connections to other computers such as network connections, file transfers, internet connections, etc.

According to a fifth aspect of the invention there is provided a method of reprogramming electronic apparatus programmed with a first code held in a non-volatile memory during normal operation of said apparatus with a second code, said method comprising comparing a list of suitable target components contained within a portion of said second code with the components of the electronic apparatus, and only reprogramming said non-volatile memory if the second code is compatible the components of the electronic apparatus.

An advantage of this method is that it ensures that the second code used to program the non-volatile memory functions correctly. If a portion of the second code does not function, then the non-volatile memory will not be reprogrammed, and thus, the first code residing in the non-volatile memory will not be lost. Since the first code has not been lost, the apparatus will continue to function.

In one embodiment of this method, none of the second code is executed before it is programmed in to the non-volatile memory. However, some embodiments, particularly those described in relation to the first aspect of the invention may execute portions of the second code from a temporary memory before the non-volatile memory is reprogrammed.

The method may comprise providing a non-volatile memory image that contains second code suitable for running on a plurality of different components of the apparatus, and the method may further comprise selecting an appropriate portion of the non-volatile memory image to reprogram the non-volatile memory.

According to a sixth aspect of the invention there is provided an electronic apparatus corresponding to the method of the fifth aspect of the invention.

There now follows by way of example only a detailed description of the invention with reference to the accompanying drawings of which:
**Figure 1** shows a prior art method of providing the invention;
**Figure 2** shows an apparatus suitable for performing the invention;
**Figure 3** shows a method of a first embodiment of the invention;
**Figure 4** shows a method of a second embodiment of the invention;
**Figure 5** shows a flow chart outlining the method of Figure 3;
**Figure 6** shows a flow chart outlining the method of Figure 4; and
**Figure 7** shows a related method of reprogramming an electronic apparatus.

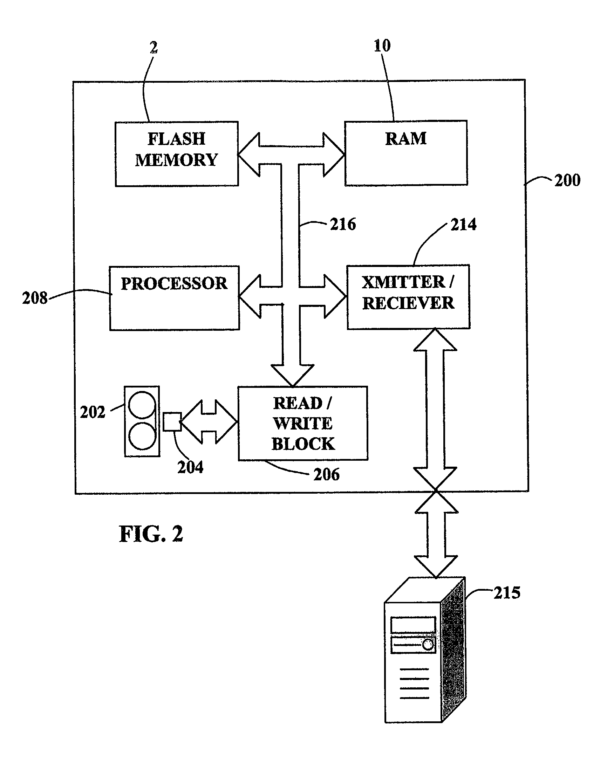

Figure 1 has been described herein before. Figure 2 shows a typical electronic apparatus 200 to which the invention may be applied. In this embodiment the electronic apparatus is a tape drive arranged to receive a tape 202, which is read from and written to by a read / write head 204. A read / write block contains dedicated circuitry for the tape drive.

The electronic apparatus further comprises a processor 208, a non-volatile flash memory 2, a volatile Random Access Memory 10, and a transmitter receiver 214. The processor 208, the flash memory 2, the transmitter /receiver 214, the RAM 10, and the read / write block 202 communicate with one another via a bus 216.

As will be appreciated the purpose of the tape drive is to read data from and write data to the tape 202. This is achieved by the processor 208 operating a first code stored in the non-volatile flash memory 2. The processor 208 includes a program counter, which refers to an address in memory from which the next instruction will be executed. Thus, if the program counter points to an address in the flash memory the next instruction will be from the flash memory, whereas if the program counter is changed to point at an address in the RAM 10 execution of the code will switch to the code contained in the RAM 10.

The flash memory 2 has two states of operation a read mode in which code can be executed from the flash memory 2, and a write mode in which the flash memory can be reprogrammed. When the flash memory is being reprogrammed it cannot be read and therefore code cannot be executed therefrom.

The transmitter / receiver 214 communicates with a computer 215 to send data read from the tape 202 and to receive data to be written to the tape 202. Further, the tape drive 200 can receive new flash memory images containing second code suitable to reprogram the flash memory 2.

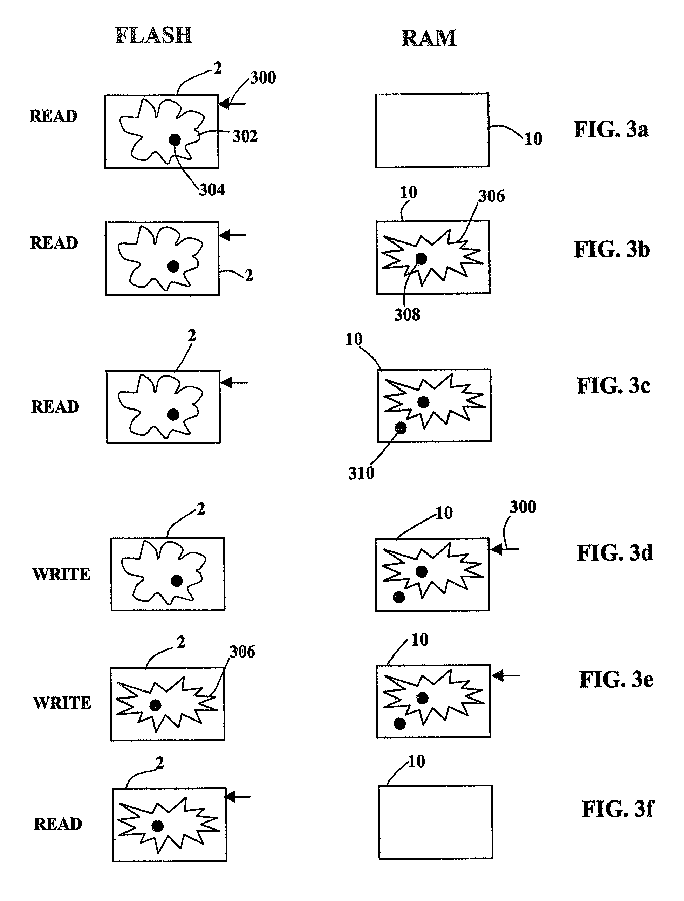

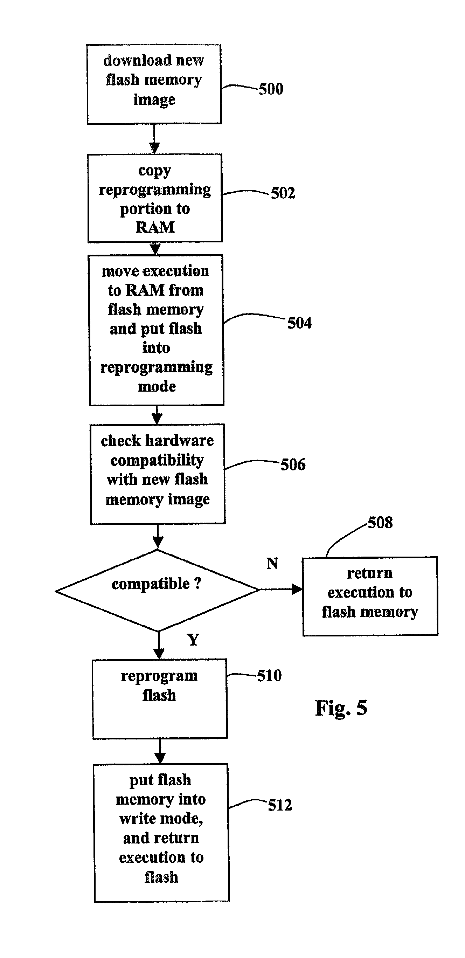

Figures 3 and 5 shows a method of reprogramming the flash memory 2 according to a first aspect of the invention. As described above a program counter 300 is pointing at an address within the flash memory 2, and thus a first code 302, containing both an instruction portion and a reprogramming portion 304, is being executed. The flash memory is appropriately in a read state allowing execution of the first code 302.

A first step in the reprogramming method is to download a new flash memory image, or second code, of the code with which it is desired to reprogram the flash memory 2, into the RAM 10 (shown in Figure 3b, and 500 in Figure 5). The memory image containing the second code also contains a reprogramming portion 308.

As shown in Figure 3c the next step of the method is to copy the reprogramming portion 308 from the memory image into the RAM 10 to form a copy of the portion 310, to allow it to be executed therefrom (502 in Figure 5).

Next, the flash memory is switched to a write state to enable it to be reprogrammed, and the program counter 300 in the processor 208 is altered to point to the address corresponding to the start of the copy of the reprogramming portion 310. (Shown in Figure 3d, and 504 in Figure 5).

Before reprogramming commences the suitability of the reprogramming portion for the electronic apparatus is checked. The reprogramming portion interrogates the hardware to ascertain the identity of the components and compares this with a portion of the new flash memory image that has just been downloaded that contains a list of suitable hardware (506 in Figure 5). If there is a match between the hardware and the components listed in the new flash memory image then execution of code within the RAM 10 continues. If there is no match then execution of reverts to code maintained within the flash memory (508 in Figure 5).

Thus, the copy of the reprogramming portion 310 copies the memory image containing the instruction portion and the reprogramming portion of the second code into to the flash memory 2, as shown in Figure 3e and 510 in Figure 5. It will be appreciated that the copy of the reprogramming portion 210 being used to reprogram the flash memory 2 has been taken from the new image. Therefore, for the contents of the flash memory to be altered the reprogramming portion 308 of the second code 306 must be capable of running on the electronic apparatus. As described in relation to Figure 1, previously the code used to reprogram the flash memory 2 was taken from the code held in the flash memory 2. Therefore, if for any reason the reprogramming portion 6 of the new, second code 16 did not function it would not be possible to perform further upgrades on the code held in the flash memory 2. Such a problem typically occurred if the flash memory were upgraded with code intended to be used on different electronic apparatus, or a different version of the electronic apparatus.

Once the reprogramming of the flash memory 2 is complete the flash memory 2 is returned to a read state, and the program counter 300 is caused to point at the appropriate first address within the flash memory 2 (Figure 3f and 512 in Figure 5).

As a further example there now follows a portion of pseudo code to provide the method of the embodiment described in relation to Figures 3 and 5. The following assumptions are made - the electronic apparatus utilises a flash memory and has the capability to reprogram the flash memory without the use of external equipment and has the capability to execute processor instructions from a temporary memory. Thus, whilst the flash memory device is being reprogrammed the processor instructions are supplied by the temporary memory. For convenience it is assumed that the temporary memory is a static random access memory (SRAM).

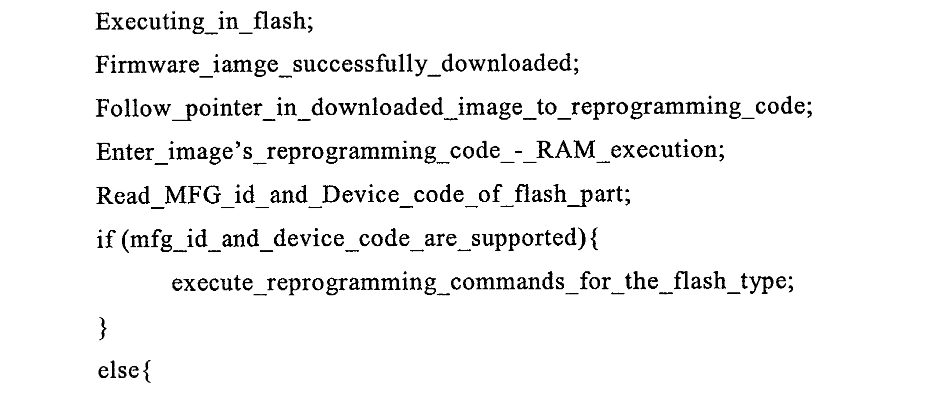

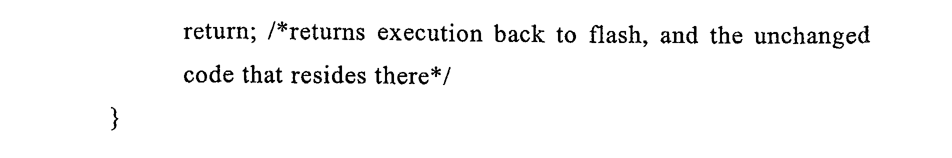

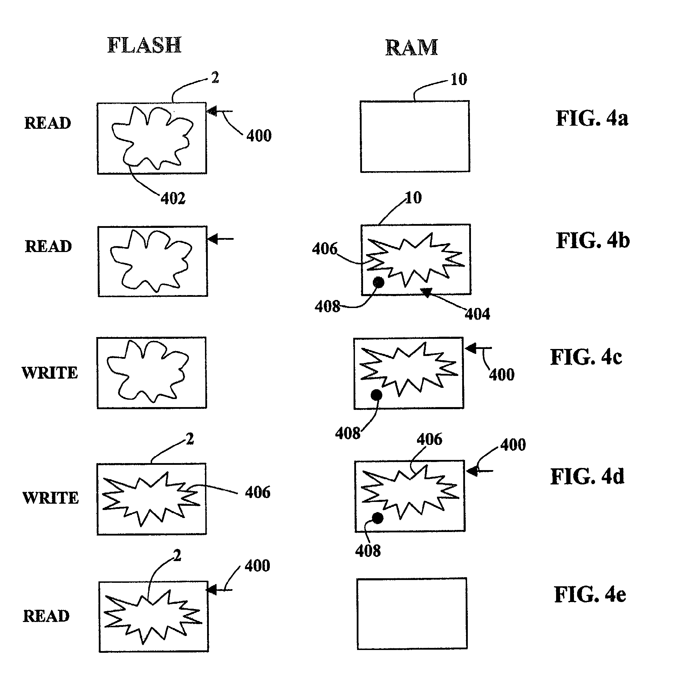

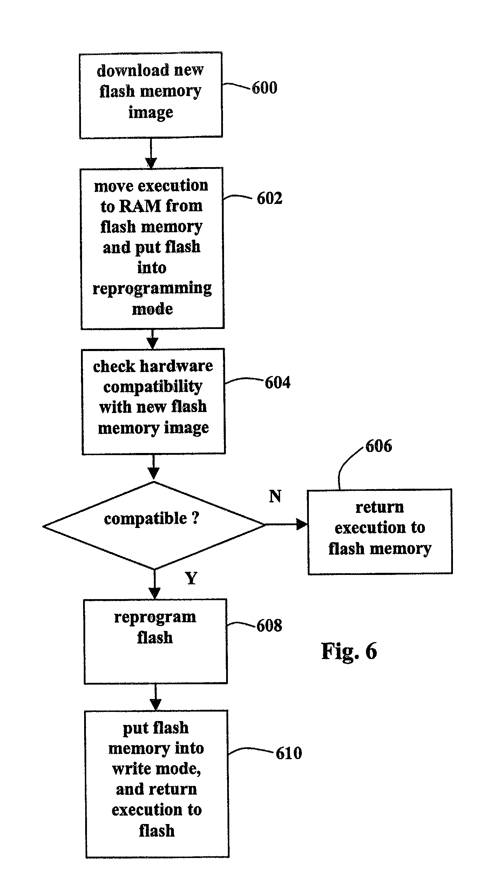

Figures 4 and 6 show a method of reprogramming the flash memory 2 according to a second aspect of the invention. Again, a program counter 400 points to an address within the flash memory 2, allowing the processor 208 to execute a first code 402 contained therein (Figure 4a).

A first step in the method is to download a new flash memory image 404 into the RAM 10 (Figure 4b and 600 Figure 6). The new flash memory image 404 comprises an instruction portion 406 together with a reprogramming portion 408. Therefore, in this embodiment the new flash memory image 404 is structured in such a way the instruction portion 406 is separable from the reprogramming portion 408.

As can be seen in Figure 4c and 602 in Figure 6 the next step in the method is cause the program counter 400 to point at an address with the RAM 10, and the flash is changed from the READ state into a WRITE state in readiness for reprogramming.

Before reprogramming commences the suitability of the reprogramming portion for the electronic apparatus is checked (604 in Figure 6). The reprogramming portion interrogates the hardware to ascertain the identity of the components and compares this with a portion of the new flash memory image 406 that has just been downloaded. If there is a match between the hardware and the components listed in the new flash memory image then execution of code within the RAM 10 continues. If there is no match then execution of reverts to code maintained within the flash memory (606 in Figure 6).

As shown in Figure 4d and 608 in Figure 6 once compatibility has been confirmed the reprogramming portion 408 reprograms the flash memory 2 with the instruction portion of the second code 406, an image of which is stored in the RAM 10. Unlike the embodiment shown in Figure 3, and because the new flash memory image is structure so that the reprogramming portion 408 is separable from the instruction portion of the second code 406, it is not necessary to copy the reprogramming portion to the flash memory 2.

As shown in Figure 4e and 610 in Figure 6 once reprogramming has been performed the program counter 400 is returned to pointing at an address within the flash memory 2 such execution of the second code newly programmed thereinto commences. Further, the flash memory 2 is returned to the read state, and the new flash memory image is deleted from the RAM 10.

An advantage of this method is that the reprogramming portion 408 is never copied into the flash memory 2 so that the size of the flash memory can made smaller, or the address space available for the second code 406 can be increased.

As a further example there now follows a portion of pseudo code to provide the method of the embodiment described in relation to Figures 4 and 6. The following assumptions are made - the electronic apparatus utilises a flash memory and has the capability to reprogram the flash memory without the use of external equipment and has the capability to execute processor instructions from a temporary memory. Thus, whilst the flash memory device is being reprogrammed the processor instructions are supplied by the temporary memory. For convenience it is assumed that the temporary memory is a static random access memory (SRAM). Further, it is assumed that the new flash memory image has been downloaded and is resident in the temporary memory so that the reprogramming portion are the last functions in the image and that the ability to find the position of the reprogramming portion in the new flash memory image in resident in the executing code:

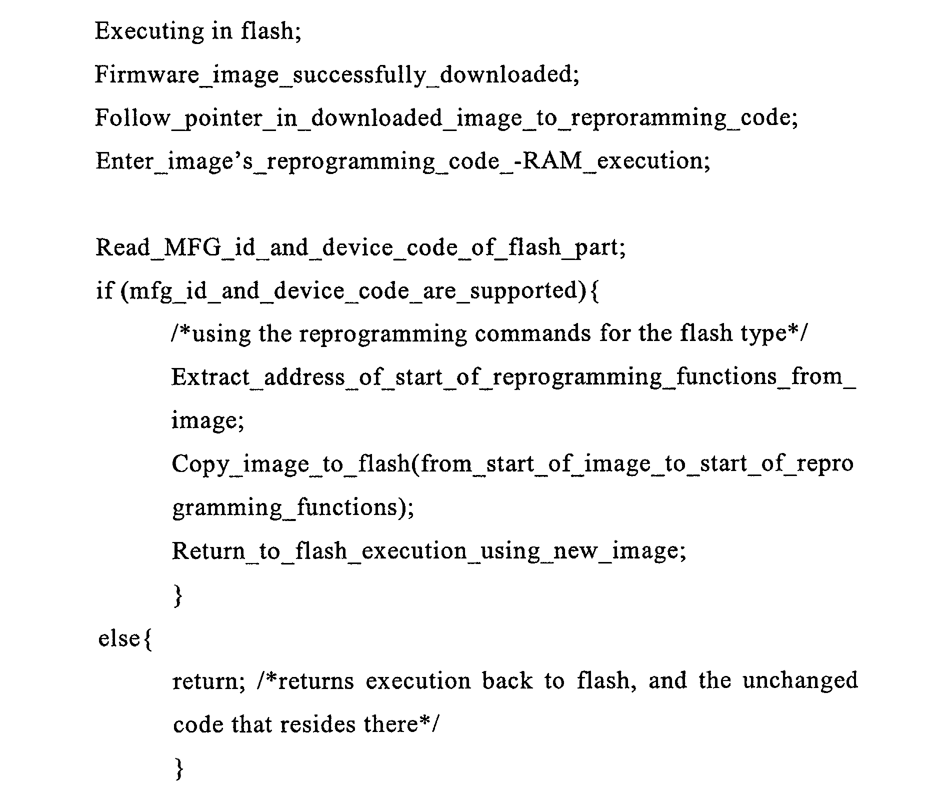

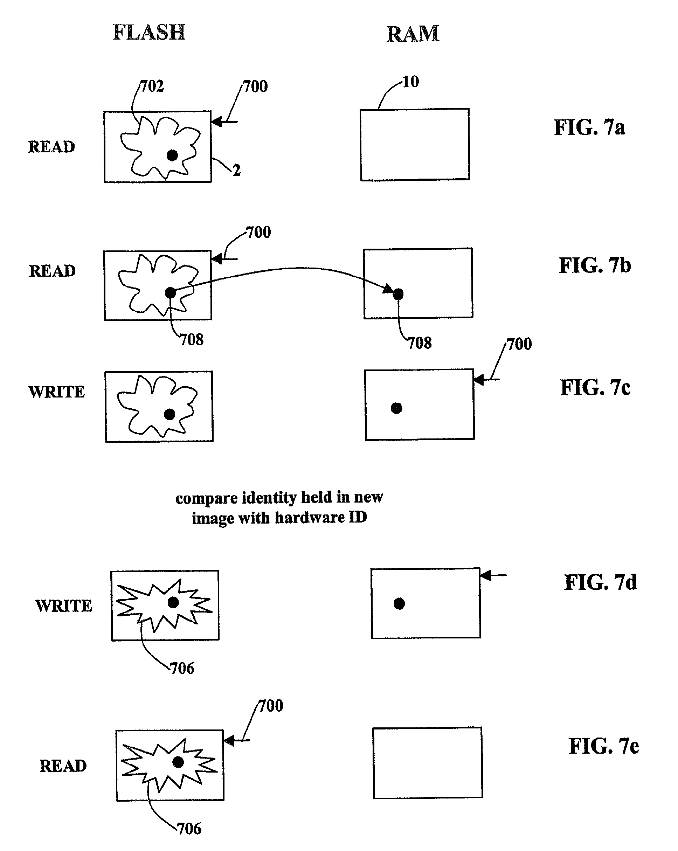

Figure 7 shows a further method of reprogramming the flash memory 2. Initially a program counter 700 points to an address within the flash memory 2 allowing the processor 208 to execute a first code 702 contained therein (Figure 7a).

A first step in the method is to copy a reprogramming portion 708, which will be used to reprogram the flash memory 2 with a second code, into the RAM 10. This is shown in Figure 7b.

Next, execution of the code switches from the code contained in the flash memory 2 to that contained in the RAM 10 and therefore, the program counter 700 now points at an address within the RAM 10. Further, the flash memory is switched into a reprogramming mode ready to receive a new code (Figure 7c).

However, before the code executing from the RAM 10 starts to reprogram the flash memory 2 it is determined whether the code that is to be used to reprogram the flash is compatible with the components of the electronic apparatus.

The code executing on the RAM 10 has access to a new flash memory image from which a second code used to reprogram the flash memory is obtained. When the flash memory image is created a list of components that the image is capable of reprogramming is contained within the image. Therefore, to ascertain whether or not the new flash memory image is compatible with the components of the electronic apparatus, the processor 208 interrogates the components to determine their identity. Once the identity of the components has been obtained it is compared with the list of components within the flash memory image.

Once it has been ascertained that the new flash memory image is suitable, the code running on the RAM 10 proceeds to reprogram the flash memory 10 with the second code 706 contained in the flash memory image (Figure 7d).

Finally, when the flash memory has been reprogrammed the program counter 700 is caused to point at an address with the flash memory, and the flash memory is returned to a read state so that it cannot be altered.

As a further example there now follows a portion of pseudo code to provide the method of the embodiment described in relation to Figures 7. The following assumptions are made - the electronic apparatus utilises a flash memory and has the capability to reprogram the flash memory without the use of external equipment and has the capability to execute processor instructions from a temporary memory. Thus, whilst the flash memory device is being reprogrammed the processor instructions are supplied by the temporary memory. For convenience it is assumed that the temporary memory is a static random access memory (SRAM).

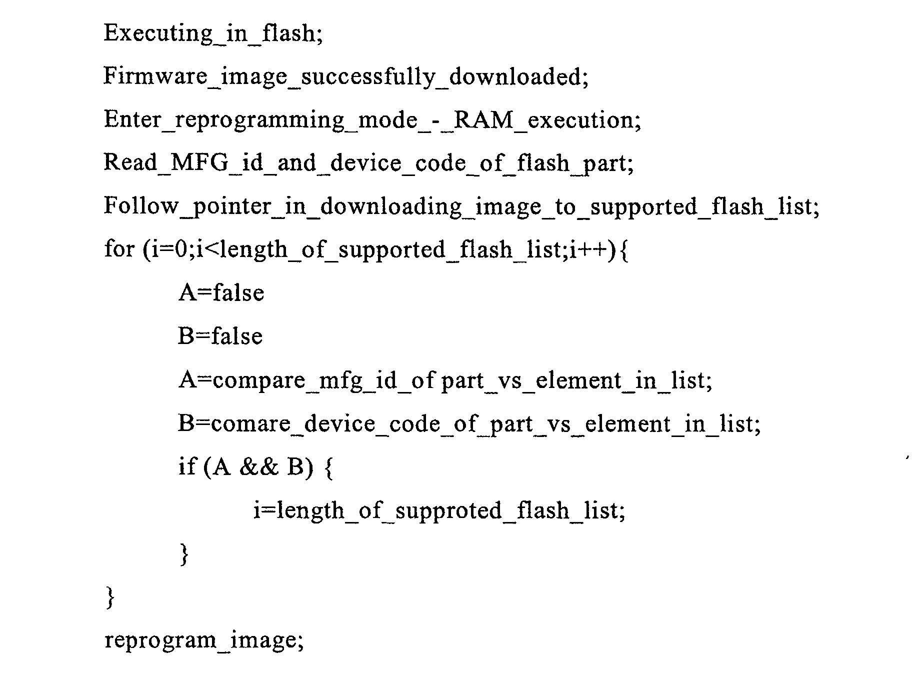

Thus, it will be seen that the loop contained in this pseudo code selects an appropriate second code from within the flash memory image (non-volatile memory image).

## Claims

1. A method of reprogramming electronic apparatus programmed with a first code held in a non-volatile memory during normal operation of said apparatus comprising
i. copying a second code, comprising a reprogramming portion arranged to reprogram said non-volatile memory, and an instruction portion, into a temporary memory
ii. executing at least said reprogramming portion of said second code from said temporary memory in order to cause said second code to be programmed into said non-volatile memory replacing said first set of code in said non-volatile memory.

2. A method according to claim 1 comprising reprogramming said non-volatile memory with said reprogramming portion in addition to said instruction portion of said second code.

3. A method according to claim 1 comprising reprogramming said non-volatile memory with said instruction portion of said second code.

4. A method according to claim 3 wherein once the contents of the temporary memory have been refreshed the reprogramming portion will be lost.

5. A method according to any one of the preceding claims wherein the method arranges for the reprogramming portion to occur after the instruction portion within the second code.

6. A method according to any one of the preceding claims wherein the method comprises copying the second code into the temporary memory from an external device to which the electronic apparatus is connected.

7. A method according to any one of the preceding claims wherein the method comprises switching execution from the non-volatile memory to the temporary memory before the second code is programmed into said non-volatile memory.

8. A method according to claim 7 wherein once execution has been switched to the temporary memory the non-volatile memory is erased.

9. A method according to claim 7 wherein once execution has been switched to the temporary memory the first code within the non-volatile memory is overwritten by the second code.

10. A method according to any one of claims 7 to 9 comprising switching execution back to the non-volatile memory once it has been programmed with at least a portion of the second code.

11. A method according to any one of the preceding claims comprising checking that the second code is suitable for programming the non-volatile memory before step ii. of the method is performed.

12. A method according to claim 11 comprising continuing to use the first code if the method determines that the second code is not suitable for reprogramming the non-volatile memory.

13. A method according to claim 11 or 12 comprising ascertaining the identity of the components within the electronic apparatus by interrogating them.

14. A method according to claim 13 comprising comparing the identity obtained by interrogating the components with a list of suitable hardware contained within a portion of the second code.

15. A method according to any one of the preceding claims comprising arranging the reprogramming portion such that it contains the necessary code to reprogram a plurality of hardware types.

16. A computer readable medium having stored therein instructions for causing a processing unit to execute the method of any one of claims 1 to 16.

17. An electronic apparatus comprising a non-volatile memory generally holding a first code and capable of being reprogrammed, a temporary memory arranged to hold code temporarily, a processor arranged to execute instructions held in either the non-volatile memory, or the temporary memory, and a transmitter / receiver arranged to receive data from a source external of the apparatus, wherein the processor is arranged to cause a second code, comprising at least an instruction and a reprogramming portion, to be downloaded into the temporary memory via the transmitter /receiver and store said second code in said temporary memory and execute at least said reprogramming portion of said second code residing in said temporary memory to reprogram said flash memory with said second code.

18. An apparatus according to claim 18 wherein the processor is arranged to obtain the second code from a computer readable medium readable by the apparatus.

19. An apparatus according to claim 17 or 18 wherein the processor is arranged to obtain the second code from a computer readable medium readable by the apparatus.

20. An apparatus according to claim 17 or 18 wherein the transmitter /receiver is arranged to connect to a network.

21. An apparatus according to any one of claims 17 to 20 wherein the non-volatile memory is capable of holding both the reprogramming and the instruction portions of the second code.

22. An apparatus according to any one of claims 17 to 21 wherein the non-volatile memory is capable of holding only the instruction portion of the second code.

23. An apparatus according to any one of claims 17 to 22 the processor is arranged to interrogate components of the apparatus to ascertain their identity.

24. An apparatus according to claim 23 wherein the processor is arranged to compare the identity obtained from the hardware components with a portion of the second code.

25. An apparatus according to claim 24 wherein the processor is further arranged to reprogram the non-volatile memory only if the second code is compatible with the apparatus.

26. A system comprising a computer connected to an apparatus according to any one of claims 17 to 25.

27. A system according to claim 26 wherein the transmitter / receiver of the apparatus comprises a connection between the apparatus and the computer.
